# EUROPÄISCHE PATENTSCHRIFT

(11) **EP 2 067 645 B1**
(45) Veröffentlichungstag und Bekanntmachung des Hinweises auf die Patenterteilung: **18.05.2011**
(21) Anmeldenummer: 08105909.9
(22) Anmeldetag: 02.12.2008
(51) Int. Cl.: B60J 10/00, B23P 19/04

(54) **Verfahren und eine Vorrichtung zum Anbringen von Dichtungsprofilen**
Method and device for applying seal profiles
Procédé et dispositif d'application de joints d'étanchéité

(30) Priorität: 05.12.2007 DE 102007058839
(43) Veröffentlichungstag der Anmeldung: 10.06.2009
(73) Patentinhaber: Grohmann Engineering GmbH, 54595 Prüm (DE)
(72) Erfinder: Grohmann, Klaus, 54597, Hersdorf (DE); Thommes, Lothar, 54634, Bitburg (DE)
(74) Vertreter: Kohlmann, Kai

(56) Entgegenhaltungen:
- EP-A- 0 497 048
- EP-A- 1 813 562
- DE-A1- 3 607 418
- DE-A1- 10 138 781
- DE-A1-102006 032 138

## Beschreibung

Die Erfindung betrifft ein Verfahren und eine Vorrichtung zum Anbringen von Dichtungsprofilen an Fahrzeugkarosserien oder deren Teilen, wobei das Dichtungsprofil aus einem Speicher abgezogen und mit einer an dem Dichtungsprofil angeordneten Klebeschicht entlang einer für die Anbringung vorgesehenen Linie an der Fahrzeugkarosserie oder dem Teil der Fahrzeugkarosserie mittels einer Andruckrolle aufgerollt wird.

Die gattungsgemäße EP 1 813 562 A1 offenbart eine derartige vorrichtung bzw ein derartiges verfahren.

Dichtungsprofile an Fahrzeugen oder Fahrzeugteilen dienen dazu, ein bewegliches Fahrzeugteil, beispielsweise eine Fahrzeugtür, im geschlossenen Zustand gegenüber dem Karosserierahmen abzudichten. Üblicherweise werden derartige Dichtungsprofile mittels mehrerer Segmente aufweisender Hilfsvorrichtungen an der Fahrzeugtür angebracht.

Um kürzere Fertigungszeiten und niedrigere Investitionskosten zu ermöglichen, schlägt die DE 101 38 781 A1 ein Verfahren zur Anbringung einer Dichtung an einer Fahrzeugtür vor, bei dem die auf einer Rolle als Endlos-Profil vorliegende Dichtung von der Rolle abgezogen und mit einer an der Dichtung vorhandenen Klebefläche entlang einer für die Anbringung vorgesehene Linie an der Tür umlaufend aufgerollt wird. Unter dem Begriff "aufgerollt" wird dabei verstanden, dass die Dichtung mit Hilfe von Andruckrollen sukzessive an der Fläche der Fahrzeugtür der vorgegebenen Montagelinie folgend angedrückt und so angebracht wird. Der Vorteil dieses Roll-Verfahrens besteht darin, dass es die vollständige Anbringung einer umlaufenden Dichtung in einem fortlaufenden Arbeitsgang ermöglicht. Die Anbringung erfolgt dabei mittels eines Roboters, der Führungsmittel für die Dichtung aufweist. Nach Beendigung des Vorganges der Anbringung wird die Dichtung mittels einer Schneidvorrichtung des Roboters auf Stoß abgeschnitten.

Die Zufuhrgeschwindigkeit des Dichtungsprofils unterliegt gewissen Schwankungen, während die Klebeschicht des Dichtungsprofils auf der Karosserie oder dem Karosserieteil aufgerollt wird. Darüber hinaus kann eine erhöhte oder verlangsamte Zufuhrgeschwindigkeit des Dichtungsprofils an der Stelle des Aufrollens erwünscht sein, um eine Dehnung oder Stauchung der aufgeklebten Dichtung gezielt herbeizuführen. Schließlich kann es bei der Bewegung des Roboter-Arms, der entweder das Fahrzeugteil längs der stationären Andruckrolle oder die bewegliche Andruckrolle gegenüber dem stationären Fahrzeugteil handhabt, zu Geschwindigkeitsschwankungen kommen, die zu Problemen bei der Applikation des Dichtungsprofils auf der Karosserie oder dem Karosserieteil führen.

Mit bisher bekannten Verfahren und Vorrichtungen zum Aufrollen von Dichtungsprofilen lassen sich Geschwindigkeitsschwankungen im Applikationsprozess nur unvollständig beherrschen.

Ausgehend von diesem Stand der Technik liegt der Erfindung die Aufgabe zu Grunde, ein Verfahren zum Aufrollen von Dichtungsprofilen zu schaffen, bei dem derartige Geschwindigkeitsschwankungen während des Applikationsprozesses besser beherrschbar sind. Außerdem soll eine Vorrichtung zur Durchführung des Verfahrens angegeben werden.

Die Lösung dieser Aufgabe basiert auf dem Gedanken, die Relativbewegung zwischen dem Dichtungsprofil und der Applikationseinheit an der Stelle der Verklebung zu erfassen und optimal auf die Zuführung des Dichtungsprofiles abzustimmen. Im Einzelnen wird die Aufgabe bei einem Verfahren der eingangs erwähnten Art dadurch gelöst, dass das mit der Klebeschicht versehene Dichtungsprofil mit der Klebeschicht an der Fahrzeugkarosserie oder dem Teil der Fahrzeugkarosserie aufgerollt wird und unmittelbar an der Stelle des Aufrollens des Dichtungsprofils die Relativgeschwindigkeit zwischen dem Dichtungsprofil oder der Fahrzeugkarosserie oder dem Teil der Fahrzeugkarosserie und der Applikationseinheit gemessen wird.

Durch Erfassung der Relativgeschwindigkeit ist zu jeder Zeit bekannt, mit welcher Geschwindigkeit der Dichtungsstreifen angeklebt und sofern der Startzeitpunkt der Applikation in der Steuerung erfasst wird, wie lang der bereits applizierte Abschnitt des Dichtungsprofils ist. Unter Berücksichtigung dieser Daten lässt sich der Applikationsprozess optimal mit der Zufuhr des Dichtungsprofils synchronisieren.

Die Zufuhr des Dichtungsprofils erfolgt in an sich bekannter Weise mittels Antriebs- und/oder Führungselementen bis zu der Andruckrolle. Weist die Zuführung keine Antriebselemente auf, kann die Andrucksrolle selbst angetrieben sein.

Für die Durchführung des erfindungsgemäßen Verfahrens spielt es keine Rolle, ob die Fahrzeugkarosserie oder das Teil der Fahrzeugkarosserie gegenüber der stationär gelagerten Andruckrolle bewegt wird oder ob die Andruckrolle gegenüber der stationär gehalterten Fahrzeugkarosserie oder dem stationär gehalterten Teil der Fahrzeugkarosserie bewegt wird. Darüber hinaus lässt sich das erfindungsgemäße Verfahren selbst dann anwenden, wenn sowohl die Fahrzeugkarosserie oder das Teil der Fahrzeugkarosserie als auch die Andruckrolle gleichzeitig bewegt werden, da an der Stelle des Aufrollens des Dichtungsprofils die Relativgeschwindigkeit gemessen wird.

Vorzugsweise erfolgt die Geschwindigkeitsmessung unmittelbar an dem Dichtungsprofil selbst. Da an der Stelle des Aufrollens die Verbindung zwischen Klebestreifen und Karosserie bzw. Karosserieteil erfolgt, ist es jedoch grundsätzlich auch möglich, die Geschwindigkeitsmessung an der Stelle des Aufrollens an der Karosserie oder dem Karosserieteil vorzunehmen. Entscheidend ist allerdings, dass der zur Geschwindigkeitsmessung vorgesehene Messwertaufnehmer in unmittelbarer Nähe zu der Stelle des Aufrollens des Dichtungsprofils positioniert ist. Diese Stelle befindet sich jeweils an der für die Anbringung vorgesehenen Linie an der Fahrzeugkarosserie, an der die Klebeschicht gerade auf die Karosserie bzw. auf das Karosserieteil aufsetzt.

Die Durchführung des erfindungsgemäßen Verfahrens erfolgt vorzugsweise mit einer Vorrichtung mit den Merkmalen des Anspruchs 9. Der Messwertaufnehmer der Vorrichtung zur Durchführung des Verfahrens umfasst insbesondere ein Messrad, das auf der Fahrzeugkarosserie oder auf dem Dichtungsprofil oder dem Teil der Fahrzeugkarosserie abrollt.

Dieses Messrad ist insbesondere an einem in Richtung des Dichtungsprofils oder der Fahrzeugkarosserie oder des Teils der Fahrzeugkarosserie federbelastetem Andruckhebel gelagert. Der federbelastete Andruckhebel sorgt für eine stets sichere Anlage des Messrades an dem Dichtungsprofil oder der Fahrzeugkarosserie oder dem Teil der Fahrzeugkarosserie, insbesondere auch dann, wenn bei der Applikation zwischen der Applikationseinheit und der Fahrzeugkarosserie bzw. dem Teil der Fahrzeugkarosserie Relativbewegungen auftreten. Derartige Relativbewegungen können beispielsweise durch plötzliche Geschwindigkeitsänderungen des Roboter-Arms hervorgerufen werden.

Der Messwertaufnehmer umfasst neben dem Messrad einen Encoder, der die Rotation des Messrades in elektrische Signale umsetzt. Derartige Encoder können als optische, magnetische oder mechanische Geber ausgestaltet sein, die die aktuelle Position der Welle des Messrades erkennen und als elektrisches Signal ausgeben. Zur Entkopplung von Messrad und Encoder sowie zur Reduzierung der gefederten Massen am Andruckhebel, ist das Messrad vorzugsweise über eine biegsame Welle mit dem Encoder verbunden. Die biegsame Welle überträgt die Rotation des Messrades auf den nicht an dem federbelasteten Andruckhebel angeordneten Encoder.

Um einen Schlupf zwischen dem Messrad und dem Dichtungsprofil bzw. der Fahrzeugkarosserie oder dem Teil der Fahrzeugkarosserie zu vermeiden, sind am Umfang des Messrades vorzugsweise reibungserhöhende Mittel angeordnet. Die reibungserhöhenden Mittel können beispielsweise ein am äußeren Umfang des Messrades angeordneter O-Ring aus Gummi sein.

Nachfolgend wird die vorliegende Erfindung unter Bezugnahme auf die Zeichnungen näher beschrieben. Dabei zeigen:
- **Figur 1**: eine schematische Gesamtansicht einer Vorrichtung zur Durchführung des erfindungsgemäßen Verfahrens sowie
- **Figur 2**: eine schematische Darstellung der Applikations- einheit an der Stelle des Aufrollens der Dich- tung.

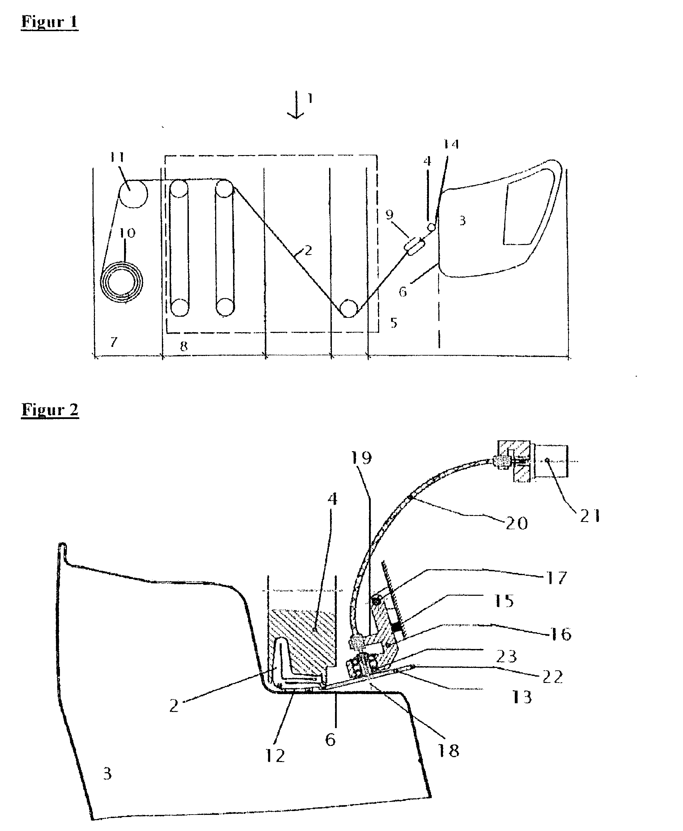

Figur 1 zeigt eine insgesamt mit (1) bezeichnete Vorrichtung zum Anbringen eines Dichtungsprofils (2) an einer Fahrzeugtür (3) mittels einer Andruckrolle (4) einer Applikationseinheit (5). Im dargestellten Ausführungsbeispiel erfolgt die Anbringung des Dichtungsprofils (2) an einer Fläche (6), die aus der Ebene der Fahrzeugtür (3) und somit aus der Zeichnungsebene in einem annähernd rechten Winkel nach oben zeigt. Die für die Anbringung des Dichtungsprofils (2) vorgesehene Linie an dieser Fläche entspricht der Kontur der schematisch dargestellten Fahrzeugtür (3).

Die Vorrichtung (1) umfasst eine Profilzuführung (7), einen optionalen Puffer (8) und die Applikationseinheit (5), die die Andruckrolle (4) sowie dieser in Bewegungsrichtung vorgeschaltete Führungsmittel (9) für das Dichtungsprofil (2) aufweist. Diese Führungsmittel (9) können bei Bedarf ebenfalls angetrieben werden und das Führungsprofil (2) in Richtung der Andruckrolle (4) vorschieben.

Im dargestellten Ausführungsbeispiel ist die Applikationseinheit (5) stationär ausgebildet. Die Fahrzeugtür (3) wird an der stationären Andruckrolle (4) mittels eines nicht dargestellten Roboterarms entlang der für die Anbringung des Dichtungsprofils (2) vorgesehenen Linie bewegt.

Die Profilzuführung (7) besteht aus einer Vorratsspule (10) als Speicher für das Dichtungsprofil (2), das auf der Vorratsspule (10) aufgewickelt ist. In Bewegungsrichtung des Dichtungsprofils (2) hinter der Vorratsspule (10) befindet sich eine angetriebene Umlenkrolle (11) zum Abziehen des Dichtungsprofils (2) von der Vorratsspule (10).

Das L-förmige Dichtungsprofil (2) weist an seiner der Fläche (6) zugewandten Seite eine Klebeschicht (12) auf, die beispielsweise in Form eines an dem Dichtungsprofil (2) befestigten Klebebandes ausgeführt sein kann.

An der Applikationseinheit (5) ist ein Messwertaufnehmer angeordnet, dessen in einer Lagerung (23) gelagertes Messrad (13) auf einem nach unten weisenden, nicht von der Andruckrolle (4) erfassten Teil des Dichtungsprofils (2) abrollt. Die Berührungslinie zwischen dem Messrad (13) und dem Dichtungsprofil (2) befindet sich stets auf Höhe derjenigen Stelle des Aufrollens des Dichtungsprofils (2) auf die Fläche (6) der Fahrzeugtür (3). Diese Stelle ist derjenige Bereich, in dem die bereits an der Fläche (6) der Fahrzeugtür (3) verklebte Klebeschicht (12) an den noch nicht verklebten Bereich (14) angrenzt (vgl. Figur 1).

Das Messrad (13) ist an einem durch eine Feder (15) belasteten Andruckhebel (16) gelagert. Die Feder (15) belastet den um die Achse (17) verschwenkbar an der Applikationseinheit (5) gelagerten Hebel in Richtung des Dichtungsprofils (2). Die Rotationsachse (18) des Messrades (13) verläuft in einem spitzen Winkel zu der Rotationsachse der nur teilweise dargestellten Andruckrolle (4), so dass das Messrad (13) ungehindert an dem Dichtungsprofil angreifen kann.

Die Welle des Messrades (13) wird an einem Haltearm (19), der sich von dem Andruckhebel in Richtung der Rotationsachse (18) erstreckt, mit einer biegsamen Welle (20) gekoppelt, die die Drehbewegung des Messrades (13) auf einen Encoder (21) überträgt, der ebenfalls an der Applikationseinheit (5) befestigt ist. Die biegsame Welle gleicht die Bewegung des federbelasteten Andruckhebels (16) gegenüber der im Übrigen stationären Applikationseinheit (5) aus.

Am Umfang des Messrades (13) befindet sich ein O-Ring (22), der die Reibung zwischen Messrad (13) und Dichtungsprofil (2) erhöht.

Wird nun erfindungsgemäß die Fahrzeugtüre (3) mittels des nicht dargestellten Roboter-Arms entlang der stationären Andruckrolle (4) entlang der für die Anbringung des Dichtungsprofils (2) vorgesehenen Linie bewegt, versetzt das Dichtungsprofil (2) an der Stelle des Aufrollens das Messrad (13) in eine Rotation um die Rotationsachse (18), die über die biegsame Welle (20) zum Encoder (21) übertragen wird. Das von dem Encoder aus der Rotation ermittelte Signal wird in der Steuerung der Vorrichtung weiterverarbeitet. Der Steuerung ist aufgrund der Verarbeitung bekannt, mit welcher Geschwindigkeit das Dichtungsprofil tatsächlich aufgebracht wird und welche Länge des Dichtungsprofils (2) bereits an der Tür (3) appliziert ist. Diese Informationen können zur gezielten Steuerung des Roboters sowie zur Steuerung der Profilzuführung (7) verwendet werden, insbesondere um die Profilzufuhr optimal auf den Applikationsprozess abzustimmen.

### Bezugszeichenliste:

| **Nr.** | **Bezeichnung** |
|---|---|
| 1. | Vorrichtung |
| 2. | Dichtungsprofil |
| 3. | Fahrzeugtür |
| 4. | Andruckrolle |
| 5. | Applikationseinheit |
| 6. | Fläche |
| 7. | Profilzuführung |
| 8. | Puffer |
| 9. | Führungsmittel |
| 10. | Vorratsspule |
| 11. | Umlenkrolle |
| 12. | Klebeschicht |
| 13. | Messrad |
| 14 | nicht verklebter Bereich |
| 15. | Feder |
| 16. | Andruckhebel |
| 17. | Achse |
| 18. | Rotationsachse |
| 19. | Haltearm |
| 20. | biegsame Welle |
| 21. | Encoder |
| 22. | O-Ring |
| 23. | Lagerung |

## Patentansprüche

1. Verfahren zum Anbringen von Dichtungsprofilen an Fahrzeugkarosserien oder deren Teilen, wobei das Dichtungsprofil insbesondere aus einem Speicher abgezogen und mit einer an dem Dichtungsprofil angeordneten Klebeschicht entlang einer für die Anbringung vorgesehenen Linie an der Fahrzeugkarosserie oder dem Teil der Fahrzeugkarosserie mittels einer Andruckrolle einer Applikationseinheit aufgerollt wird, wobei
- das mit der Klebeschicht (12) versehene Dichtungsprofil (2) mit der Klebeschicht an der Fahrzeugkarosserie oder dem Teil (3) der Fahrzeugkarosserie aufgerollt wird,
**dadurch gekennzeichnet, dass**
- unmittelbar an der Stelle des Aufrollens des Dichtungsprofils (2) die Relativgeschwindigkeit zwischen dem Dichtungsprofil oder der Fahrzeugkarosserie oder dem Teil (3) der Fahrzeugkarosserie und der Applikationseinheit (5) gemessen wird.

2. Verfahren nach Anspruch 1, **dadurch gekennzeichnet, dass** das mit der Klebeschicht (12) versehene Dichtungsprofil (2) mittels Antriebs- und/oder Führungselementen(11,9) bis zu der Andruckrolle (4) geführt wird.

3. Verfahren nach Anspruch 1 oder 2, **dadurch gekennzeichnet, dass** die Fahrzeugkarosserie oder das Teil (3) der Fahrzeugkarosserie gegenüber der stationär gelagerten Andruckrolle (4) bewegt wird und unmittelbar an der Stelle des Aufrollens des Dichtungsprofils (2) die Geschwindigkeit des Dichtungsprofils gemessen wird.

4. Verfahren nach Anspruch 1 oder 2, **dadurch gekennzeichnet, dass** die Andruckrolle (4) gegenüber der stationär gehalterten Fahrzeugkarosserie oder dem stationär gehalterten Teil (3) der Fahrzeugkarosserie bewegt wird und unmittelbar an der Stelle des Aufrollens des Dichtungsprofils (2) die Geschwindigkeit des Dichtungsprofils gemessen wird.

5. Verfahren nach Anspruch 3 oder 4, **dadurch gekennzeichnet, dass** die Geschwindigkeitsmessung an dem Dichtungsprofil (2) erfolgt.

6. Verfahren nach Anspruch 3 oder 4, **dadurch gekennzeichnet, dass** die Geschwindigkeitsmessung an der Fahrzeugkarosserie oder dem Teil (3) der Fahrzeugkarosserie erfolgt.

7. Verfahren nach einem der Ansprüche 3 bis 6, **dadurch gekennzeichnet, dass** die Bewegung der Andruckrolle (4) oder des Teils (3) der Fahrzeugkarosserie mit Hilfe eines Roboters erfolgt.

8. Verfahren nach einem der Ansprüche 1 bis 7, **dadurch gekennzeichnet, dass** die Geschwindigkeitsmessung mittels eines auf dem Dichtungsprofil (2) oder an der Fahrzeugkarosserie oder dem Teil (3) der Fahrzeugkarosserie abrollenden Messrades (13) erfolgt.

9. Vorrichtung zur Durchführung des Verfahrens nach einem der Ansprüche 1 bis 8, **dadurch gekennzeichnet, dass**
- die Vorrichtung (1) eine Applikationseinheit (5) mit einer Andruckrolle (4) aufweist, die das Dichtungsprofil (2) mit der Klebeschicht (12) an der Fahrzeugkarosserie oder einem Teil (3) der Fahrzeugkarosserie aufrollt,
- die Vorrichtung (1) eine Profilzuführung (7) für das Dichtungsprofil aufweist und
- an der Applikationseinheit (5) ein Messwertaufnehmer (13,21) zur Geschwindigkeitsmessung angeordnet ist.

10. Vorrichtung nach Anspruch 9, **dadurch gekennzeichnet, dass** der Messwertaufnehmer ein Messrad (13) umfasst, das auf dem Dichtungsprofil (2), der Fahrzeugkarosserie oder dem Teil (3) der Fahrzeugkarosserie abrollt.

11. Vorrichtung nach Anspruch 10, **dadurch gekennzeichnet, dass** das Messrad (13) mit einem Encoder (21) zur Umsetzung der Rotation des Messrades in ein elektrisches Signal verbunden ist.

12. Vorrichtung nach Anspruch 11, **dadurch gekennzeichnet, dass** die Verbindung zwischen dem Messrad (13) und dem Encoder (21) über eine biegsame Welle (20) erfolgt.

13. Vorrichtung nach einem der Ansprüche 10 bis 12, **dadurch gekennzeichnet, dass** das Messrad (13) an einem in Richtung des Dichtungsprofils (2) oder der Fahrzeugkarosserie oder des Teils (3) der Fahrzeugkarosserie federbelastetem Andruckhebel (16) gelagert ist.

14. Vorrichtung nach einem der Ansprüche 10 bis 13, **dadurch gekennzeichnet, dass** am Umfang des Messrades (13) reibungserhöhende Mittel (22) angeordnet sind.

## Claims

1. A method for applying sealing profiles to vehicle bodies or parts thereof, wherein the sealing profile is in particular withdrawn from a storage device and is rolled with an adhesive layer disposed on the sealing profile along a line provided for the application on a vehicle body or said part of the vehicle body by means of a pressing roll of an application unit, wherein
- the sealing profile (2) provided with the adhesive layer (12) is unrolled with the adhesive layer on the vehicle body or said part (3) of the vehicle body,
**characterised in that**
- directly at the point of unrolling of the sealing profile (2), the relative speed between the sealing profile or the vehicle body or said part (3) of the vehicle body and the application unit (5) is measured.

2. The method according to claim 1, **characterised in that** the sealing profile (2) provided with the adhesive layer (12) is guided by means of drive and/or guide elements (11, 9) as far as the pressing roll (4).

3. The method according to claim 1 or 2, **characterised in that** the vehicle body or said part (3) of the vehicle body is moved with respect to the stationarily mounted pressing roll (4) and the speed of the sealing profile is measured directly at the point of unrolling of the sealing profile (2).

4. The method according to claim 1 or 2, **characterised in that** the pressing roll (4) is moved with respect to the stationarily held vehicle body or said stationarily held part (3) of the vehicle body and the speed of the sealing profile is measured directly at the point of unrolling of the sealing profile (2).

5. The method according to claim 3 or 4, **characterised in that** the speed measurement is made on the sealing profile (2).

6. The method according to claim 3 or 4, **characterised in that** the speed measurement is made on the vehicle body or said part (3) of the vehicle body.

7. The method according to any one of claims 3 to 6, **characterised in that** the movement of the pressing roll (4) or said part (3) of the vehicle body is effected with the aid of a robot.

8. The method according to any one of claims 1 to 7, **characterised in that** the speed measurement is effected by means of a metering wheel (13) which rolls on the sealing profile (2) or on the vehicle body or said part (3) of the vehicle body.

9. Apparatus for carrying out the method according to any one of claims 1 to 8, **characterised in that**
- the apparatus (1) comprises an application unit (5) with a pressing roll (4) which unrolls the sealing profile (2) with the adhesive layer (12) on the vehicle body or a part (3) of the vehicle body,
- the apparatus (1) has a profile feed (7) for the sealing profile and
- a sensor (13, 21) for the speed measurement is provided on the application unit (5).

10. The apparatus according to claim 9, **characterised in that** the sensor comprises a metering wheel (13) which rolls on the sealing profile (2), the vehicle body or said part (3) of the vehicle body.

11. The apparatus according to claim 10, **characterised in that** the measuring wheel (13) is connected to an encoder (21) for converting the rotation of the metering wheel into an electrical signal.

12. The apparatus according to claim 11, **characterised in that** the connection between the metering wheel (13) and the encoder (21) is made via a flexible shaft (20).

13. The apparatus according to any one of claims 10 to 12, **characterised in that** the metering wheel (13) is mounted on a pressing lever (16) which is springloaded in the direction of the sealing profile (2) or the vehicle body or said part (3) of the vehicle body.

14. The apparatus according to any one of claims 10 to 13, **characterised in that** friction-enhancing means (22) are disposed on the circumference of the metering wheel (13).

## Revendications

1. Procédé pour placer des profilés d'étanchéité sur des carrosseries de véhicule ou leurs parties, le profilé d'étanchéité étant enlevé en particulier d'un entrepôt et étant enroulé avec une couche adhésive disposée sur le profilé d'étanchéité le long d'une ligne prévue pour le placement sur la carrosserie du véhicule ou la partie de la partie de carrosserie au moyen d'un galet presseur d'une unité d'application,
- le profilé d'étanchéité (2) doté de la couche adhésive (12) étant enroulé avec la couche adhésive sur la carrosserie du véhicule ou la partie (3) de la carrosserie du véhicule,
**caractérisé en ce que**
- la vitesse relative entre le profilé d'étanchéité et la carrosserie du véhicule ou la partie (3) de la carrosserie du véhicule et l'unité d'application (5) est mesurée directement à l'emplacement de l'enroulement du profilé d'étanchéité (2).

2. Procédé selon la revendication 1, **caractérisé en ce que** le profilé d'étanchéité (2) doté de la couche adhésive (12) est guidée au moyen d'éléments d'entraînement et/ou d'éléments de guidage (11, 9) jusqu'au galet presseur (4).

3. Procédé selon la revendication 1 ou 2, **caractérisé en ce que** la carrosserie du véhicule ou la partie (3) de la carrosserie du véhicule est déplacée par rapport au galet presseur (4) monté de façon fixe et la vitesse du profilé d'étanchéité est mesurée directement à l'emplacement de l'enroulement du profilé d'étanchéité (2).

4. Procédé selon la revendication 1 ou 2, **caractérisé en ce que** le galet presseur (4) est déplacé par rapport à la carrosserie du véhicule maintenue fixe ou la partie (3) maintenue fixe de la carrosserie du véhicule et la vitesse du profilé d'étanchéité est mesurée directement à l'emplacement de l'enroulement du profilé d'étanchéité (2).

5. Procédé selon la revendication 3 ou 4, **caractérisé en ce que** la mesure de la vitesse s'effectue sur le profilé d'étanchéité (2).

6. Procédé selon la revendication 3 ou 4, **caractérisé en ce que** la mesure de la vitesse s'effectue sur la carrosserie du véhicule ou la partie (3) de la carrosserie du véhicule.

7. Procédé selon l'une quelconque des revendications 3 à 6, **caractérisé en ce que** le déplacement du galet presseur (4) ou de la partie (3) de la carrosserie du véhicule s'effectue à l'aide d'un robot.

8. Procédé selon l'une quelconque des revendications 1 à 7, **caractérisé en ce que** la mesure de la vitesse s'effectue au moyen d'une roue de mesure (13) roulant sur le profilé d'étanchéité (2) ou sur la carrosserie du véhicule ou la partie (3) de la carrosserie du véhicule.

9. Dispositif pour mettre en oeuvre le procédé selon l'une quelconque des revendications 1 à 8, **caractérisé en ce que**
- le dispositif (1) présente une unité d'application (5) avec un galet presseur (4), qui fait rouler le profilé d'étanchéité (2) avec la couche adhésive (12) sur la carrosserie du véhicule ou une partie (3) de la carrosserie du véhicule,
- le dispositif (1) présente une arrivée de profilé (7) pour le profilé d'étanchéité et
- un enregistreur de valeur mesurée (13, 21) pour la mesure de la vitesse est disposé sur l'unité d'application (5).

10. Dispositif selon la revendication 9, **caractérisé en ce que** l'enregistreur de valeur mesurée comprend une roue de mesure (13) qui roule sur le profilé d'étanchéité (2), la carrosserie du véhicule ou la partie (3) de la carrosserie du véhicule.

11. Dispositif selon la revendication 10, **caractérisé en ce que** la roue de mesure (13) est relié un encodeur (21) pour la conversion de la rotation de la roue de mesure en un signal électrique.

12. Dispositif selon la revendication 11, **caractérisé en ce que** la liaison entre la roue de mesure (13) et l'encodeur (21) s'effectue au moyen d'un arbre (20) flexible.

13. Dispositif selon l'une quelconque des revendications 10 à 12, **caractérisé en ce que** la roue de mesure (13) est monté sur un levier de pression (16) sollicité par ressort en direction du profilé d'étanchéité (2) ou de la carrosserie ou de la partie (3) de la carrosserie du véhicule.

14. Dispositif selon l'une quelconque des revendications 10 à 13, **caractérisé en ce que** des moyens (22) augmentant le frottement sont disposés sur le pourtour de la roue de mesure (13).
